# EUROPEAN PATENT SPECIFICATION

(11) **EP 3 367 750 B1**
(45) Date of publication and mention of the grant of the patent: **02.09.2020**
(21) Application number: 17852996.2
(22) Date of filing: 15.09.2017
(51) Int. Cl.: H05B 3/00, B23K 1/005, B23K 1/008, B23K 3/04, B23K 31/02, B23K 101/42

(54) **HEATING DEVICE AND METHOD FOR MANUFACTURING PLATE-SHAPED MEMBER**
HEIZVORRICHTUNG UND VERFAHREN ZUR HERSTELLUNG EINES PLATTENFÖRMIGEN ELEMENTS
DISPOSITIF DE CHAUFFAGE ET PROCÉDÉ DE FABRICATION D'UN ÉLÉMENT EN FORME DE PLAQUE

(30) Priority: 21.09.2016 JP 2016183949
(43) Date of publication of application: 29.08.2018
(73) Proprietor: Origin Company, Limited, Saitama-shi Saitama (JP)
(72) Inventor: SHINOHARA, Shinichi, Saitama-shi Saitama 338-0823 (JP); SUZUKI, Takayuki, Saitama-shi Saitama 338-0823 (JP); MATSUDA, Jun, Saitama-shi Saitama 338-0823 (JP); NAGAHAMA, Masanobu, Saitama-shi Saitama 338-0823 (JP); OKUBO, Tatsuo, Saitama-shi Saitama 338-0823 (JP); OZAWA, Naoto, Saitama-shi Saitama 338-0823 (JP)
(74) Representative: Halliwell, Bethan Frances
(86) International application number: PCT/JP2017/033555
(87) International publication number: WO 2018/056223

(56) References cited:
- WO-A1-2009/022590
- JP-A- 2004 533 098
- JP-A- 2007 294 990
- JP-A- 2014 143 304
- US-A- 5 267 607
- US-A1- 2015 294 893
- US-B1- 6 394 797

## Description

### TECHNICAL FIELD

The present invention relates to a heating apparatus and a method for producing a plate-like object, and more particularly, to a heating apparatus and a method for producing a plate-like object by which a heating target object can be heated uniformly.

### BACKGROUND ART

In a thermal-bonding apparatus, for example, a soldering apparatus for soldering a work, the work as a target object of thermal-bonding is heated. A thermal-bonding apparatus for heating a target object of thermal-bonding is known and includes a mount table on which the target object is placed with one of its faces being in contact entirely with the mount table, and a heat emission heater for heating the mount table from the side opposite the target object side. The target object is heated via the mount table, which receives heat from the heat emission heater and undergoes a temperature rise (refer to Patent Document 1, for example).

### [Prior Art Document]

### [Patent Document]

Patent Document 1: JP 2014-143304 A

JP 2007 294990 relates to a substrate processing apparatus in which multiple pins are formed on the substrate mounting surface of a susceptor that is heated by high frequency induction, a heater and the like. A wafer is floated from the substrate mounting surface of the susceptor and is mounted on the susceptor. While the wafer is heated by radiative heating and gaseous phase thermal conduction from the susceptor to the wafer, the ashing of resist on the wafer is performed. The susceptor does not directly touch the substrate mounting surface.

US 5,267,608 relates to a magnetron sputtering apparatus having a heating susceptor in a vacuum chamber to support a wafer. The wafer is fixed on a ring-shaped projection by clamps at wafer-mounted section on the top of the susceptor. A substantially closed space is formed between the underside of the wafer and that face on the top of the susceptor which is defined by the wafer-mounted section to oppose the underside of the wafer. Ar gas which serves as heat-medium gas is supplied into the closed space, flowing into it from its peripheral area. The Ar gas is exhausted at the center of the closed space by a vacuum pump. Heat is transmitted from the susceptor of the wafer through the Ar gas to set the wafer at a certain temperature.

US 6,394,797 relates to a substrate temperature control system capable of unifying the temperature of the substrate and capable of shortening the temperature elevation time (temperature lowering time), the substrate temperature control system is equipped with a temperature control plate (heating or cooling plate) having a plurality of projections on its surface and acting to set the temperature of the substrate.

US 2015/294893 relates to a substrate holder having a plate element for receiving a substrate. The plate element comprises at least one recess in a first side of the plate element as well as a plurality of spacers in the at least one recess, at least one opening, which is fluidly connected to the recess and which may be connected to an external gas delivery/exhaust unit, at least one notch or channel, which radially surrounds the recess, at least one opening, which is fluidly connected to the notch or channel and may be connected to an external gas delivery/exhaust unit, a circumferential web, which radially surrounds the recess and is located between the recess and the notch or channel, and circumferential contact surfaces for the substrate, wherein a first circumferential contact surface is formed on the upper side of the web and radially surrounds the recess, such that a substrate abutting against the first contact surface forms an enclosed chamber with the recess, and a second circumferential contact surface, which radially surrounds the notch or channel.

### SUMMARY OF THE INVENTION

### PROBLEM TO BE SOLVED BY THE INVENTION

However, when a target object is heated with its one entire face being in contact with the mount table, uniform heat transfer from the mount table to the target object may not be achieved and the target object may therefore not be able to be heated uniformly.

The present invention has been made in view of the above problem, and it is, therefore, an object of the present invention to provide a heating apparatus and a method for producing a plate-like object by which a heating target object can be heated uniformly.

### MEANS FOR SOLVING THE PROBLEM

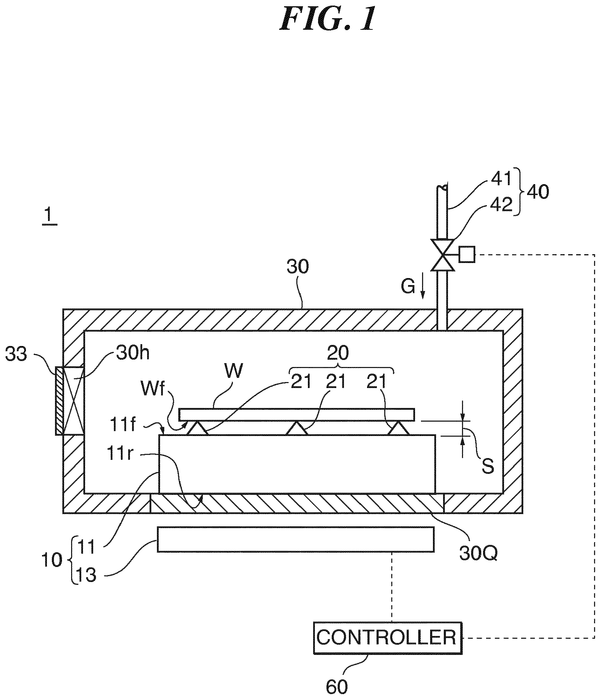

To achieve the above object, a heating apparatus according to the present invention is, as shown in FIG. 1, for example, an apparatus for heating a plate-like heating target object W, and the heating apparatus 1 includes a heater 10 having a front face 11f formed to have a size capable of covering a whole face Wf of the heating target object W and configured to generate heat to be applied to the heating target object W; and a support member 20 for supporting the face Wf of the heating target object W in such a manner that the support member 20 is configured to prevent direct heat transfer between the face Wf of the heating target object W and the support member 20 and a clearance between the front face 11f and the face Wf of the heating target object W is maintained in a predetermined clearance S when the heating target object W is supported, wherein the predetermined clearance S allows a fluid to be present between the front face 11f and the face Wf of the heating target object W but does not induce convection of the fluid. Here, the expression "prevent direct heat transfer" used with reference to the support member means that direct heat transfer is substantially prevented. Typically, it means that heat transfer that causes temperature variation in the heating target object is prevented. The expression "not induce convection of the fluid" means that convection of the fluid is not substantially induced. Typically, it means that convection of the fluid by which the heating target object placed on the support member is flapped is not induced.

With this configuration, the predetermined clearance in which the fluid is present is formed between the front face of the heater and the face of the heating target object by the support member so that heat can be transferred from the heater to the heating target object via the fluid. Thus, the face of the heating target object can be heated uniformly.

As shown in FIG. 1, for example, in the heating apparatus 1 according to the present invention, the support member 20 is disposed on the front face 11f of the heater 10.

With this configuration, the heating target object can be supported with a simple configuration.

As f shown in FIG. 1, for example, in the heating apparatus 1 according to the present invention, the heater 10 includs a heating source 13 for receiving external energy and converting the external energy into heat; and a jig 11 having the front face 11f formed thereon, wherein the jig 11 is configured to receive heat from the heating source 13 and transfer heat to the fluid present in the predetermined clearance S.

With this configuration, the heating source and the jig can be separated and the degree of freedom of the configuration of the heating source and the jig can be improved. The jig is configured to prevent the heating target object from being directly exposed to electromagnetic waves that cause heat generation.

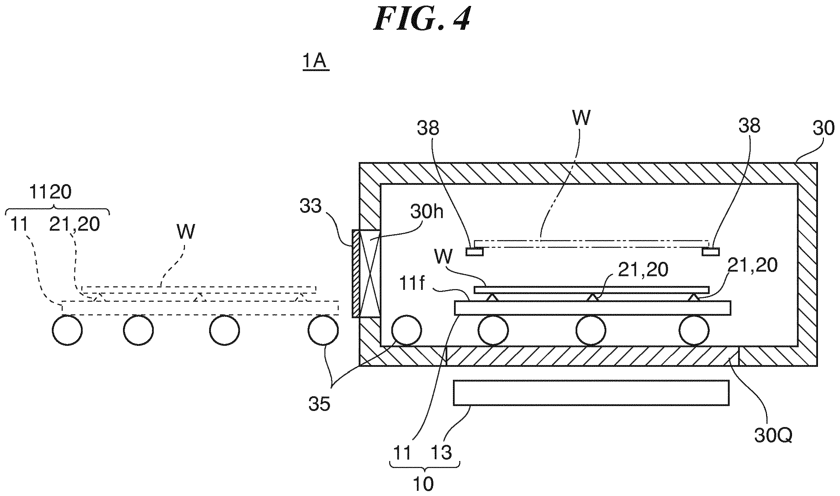

As shown in FIG. 4, for example, in the heating apparatus 1A according to the present invention, the jig 11 is configured to be movable between a state of being located in a position opposed to the heating source 13 and a state of not being located in the position opposed to the heating source 13 (shown by broken lines in FIG. 4).

With this configuration, because the jig can be moved to the state of not being located in the position opposed to the heating source, maintenance (such as washout of volatiles) is facilitated. In addition, because the jig is moved together with the heating target object supported on the support member provided on the front face of the jig, the temperatures of the jig and the heating target object can be increased from ambient temperature. This facilitates the estimation of changes in temperature.

As shown in FIG. 4, for example, the heating apparatus 1A according to some embodiments includes a retainer 38 for retaining the heating target object W in a position where it can receive heat from the heating source 13 with the jig 11 in the state of not being located in the position opposed to the heating source 13 (shown by chain double-dashed lines in FIG. 4).

With this configuration, the heating target object can be directly heated with the heating source without the intervention of the jig. Thus, another way of heating can be selected in addition to heating of the heating target object via the jig, and a variety of usage depending on the situation can be obtained.

As shown in FIG. 1, for example, the heating apparatus 1 according to the present invention further includes a chamber 30 accommodating the jig 11 and the support member 20; and a gas supply unit 40 for supplying an inert gas or reducing gas into the chamber 30; wherein the fluid present in the predetermined clearance S is the inert gas or reducing gas.

With this configuration, even if the heating target object has a portion susceptible to oxidation, the portion can be prevented from undergoing oxidation.

As shown in FIG. 1, for example, in the heating apparatus 1 according to some embodiments, the heating source 13 is constituted of an infrared ray lamp installed outside a chamber 30.

With this configuration, the configuration in the chamber can be simplified and maintenance in the chamber can be carried out easily.

As shown in FIG. 1, for example, the heating apparatus 1 according to some embodiments further includes a controller 60 for controlling a heat generation amount from the heater 10, wherein the controller 60 is configured to control the heat generation amount from the heater 10 based on a temperature of the heating target object W.

With this configuration, the heating target object can be heated properly without overheating.

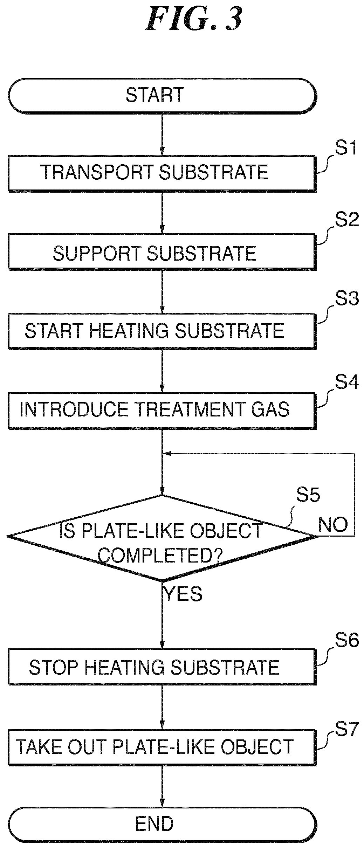

As for a method for producing a plate-like object according to the present invention, as shown in FIGs. 1 and 3, for example, the method includes a heating target object providing step (S1) of providing a plate-like heating target object W into the heating apparatus 1 according to the present invention, a supporting step (S2) of supporting the heating target object W with the support member 20; and a heating step (S3) of heating the heating target object W with the heater 10 to produce the plate-like object.

With this configuration, the plate-like object can be produced by transferring heat from the heat generation unit to the heating target object via the fluid to heat a face of the heating target object uniformly.

To achieve the above object, as shown in FIGs. 1 and 3, for example, a method for producing a plate-like object by heating a plate-like heating target object W is described herein, and the method includes a supporting step (S2) of supporting the heating target object W in such a manner that a clearance between a heat generation unit 10 for generating heat to be applied to the heating target object W and a face Wf of the heating target object W is maintained in a predetermined clearance S, wherein the predetermined clearance S allows a fluid to be present between the heat generation unit 10 and the face Wf of the heating target object W but does not induce convection of the fluid, and that direct heat transfer from the heat generation unit 10 to the face Wf of the heating target object W is prevented; and a heating step (S3) of transferring heat generated by the heat generation unit 10 to the heating target object W via the fluid to produce a plate-like object. In the heating step, the heating target object may be prevented from being directly exposed to the heat generated by the heat generation unit as electromagnetic waves that cause heat generation.

With this configuration, the plate-like object can be produced by transferring heat from the heat generation unit to the heating target object via the fluid to heat a face of the heating target object uniformly.

### EFFECT OF THE INVENTION

According to the present invention, heat can be transferred from a heater or heat generation unit to a heating target object via a fluid. Thus, a face of the heating target object can be heated uniformly.

### BRIEF DESCRIPTION OF DRAWINGS

FIG. 1 is a cross-sectional view, illustrating a general configuration of a heating apparatus according to an embodiment of the present invention.
FIG. 2A is a perspective view, illustrating a support member of the heating apparatus according to an embodiment of the present invention, FIG. 2B is a plan view, illustrating a first exemplified modification of the support member, and FIG. 2C is a plan view, illustrating a second exemplified modification of the support member.
FIG. 3 is a flowchart, explaining a method for producing a plate-like object according to an embodiment of the present invention.
FIG. 4 is a cross-sectional view, illustrating a general configuration of a heating apparatus according to a modification of the embodiment of the present invention.

### DESCRIPTION OF EMBODIMENTS

Description will hereinafter be made of an embodiment of the present invention with reference to the drawings. The same or corresponding members are denoted with the same reference numerals in all the drawings, and their descriptions are not repeated.

Referring first to FIG. 1, a heating apparatus 1 according to an embodiment of the present invention is described. FIG. 1 is a cross-sectional view, illustrating a general configuration of the heating apparatus 1. The heating apparatus 1 is an apparatus for heating a substrate W as a heating target object, and includes: a heater 10 for applying heat to the substrate W, support member 20 for supporting the substrate W, a chamber 30, a gas supply unit 40 for supplying a treatment gas G into the chamber 30, and a controller 60.

In this embodiment, the substrate W, which is to be heated in the heating apparatus 1, is a thin substrate having a flat face Wf. While the face Wf is formed into a rectangular shape of 60 mm × 90 mm in this embodiment, the face Wf may have a short side with a length of, other than 60 mm, such as 40 mm, 50 mm or 70 mm and a long side with a length of, other than 90 mm, such as 80 mm, 100 mm or 110 mm. The substrate W has a thickness of about 1 mm or less, and a substrate having a thickness of 0.4 mm or 0.8 mm, or any other thickness close thereto may be used, for example. Such a thin substrate may flap if the flow of gas around it is strong, and may warp when heated. Different portions of the face Wf of the substrate W may have different radiation factors depending, for example, on the presence or absence of a resist. In this embodiment, solder (not shown) is placed on one face of the substrate W, and then the substrate W is heated so as to melt the solder. To achieve good melting of the solder, the substrate W is preferably heated uniformly.

The heater 10 includes a jig 11 and an infrared ray lamp 13 (which is hereinafter referred to as "IR lamp 13") as a heating source. The IR lamp 13 is an infrared ray lamp heater that receives one type of external energy, electrical energy, and converts the energy into heat. The IR lamp 13 can vary its output thermal energy in a highly responsive manner by varying its input electrical energy, and is highly responsive to temperature. The jig 11 functions as a temperature adjusting member for receiving heat generated by the IR lamp 13 and releasing heat toward the substrate W that is placed on the opposite side of the side that receives heat from the IR lamp 13. As the jig 11 is provided, the substrate W can be prevented from being directly exposed to the light from the IR lamp 13. Thus, even if the substrate W is a highly reflective object, a decrease in heating efficiency caused by reflection of the light from the IR lamp 13 on the substrate W can be avoided. In this embodiment, the jig 11 is formed into a rectangular plate-like member. The jig 11 has a front face 11f on which the support member 20 is disposed and the front face 11f is formed to have such a size and shape as to be able to cover the whole face Wf of the substrate W. The jig 11 is typically formed by machining aluminum or graphite. While the jig 11 may be formed of a material other than aluminum or graphite, the use of a material with high thermal conductivity is preferred. The jig 11 may be formed from a black body. The IR lamp 13 is placed apart from the jig 11 and adjacent to a reverse face 11r, which is the face opposite the front face 11f of the jig 11. In other words, in this embodiment, the jig 11 and the heating source (the IR lamp 13) are configured to be separate (independent) each other. With this configuration, the degree of freedom of the configuration of the jig and the heating source (i.e. what to employ as the jig and the heating source) can be improved. The IR lamp 13 is arranged to extend over generally the same area as the reverse face 11r so that it can apply heat as uniformly as possible to the entire reverse face 11r. The reverse face 11r preferably has high emissivity. In this embodiment, from the viewpoint of improving thermal responsiveness, the jig 11 is formed into a rectangular plate-like shape with a thickness of around 2 mm so that it has as small a thermal capacity as possible.

In this embodiment, the support member 20 includes a plurality of projections 21 disposed on the front face 11f of the jig 11. In this embodiment, each of the projections 21 constituting the support member 20 is fixed to the front face 11f and is formed integrally with the jig 11. The support member 20 is configured to be able to support the substrate W when the substrate W is placed on the plurality of projections 21. The substrate W is typically placed on the support member 20 with the face Wf being in contact with the projections 21. Each projection 21 of the support member 20 is formed to have such a height that a predetermined clearance S is provided between the front face 11f of the jig 11 and the face Wf of the substrate W when the substrate W is placed on the support member 20. The predetermined clearance S is a clearance that does not induce convection of a fluid (in this embodiment, treatment gas G) present between the front face 11f of the jig 11 and the face Wf of the substrate W. The expression "not induce convection of a fluid" as used herein means that it is enough if substantially no convection is induced. Typically, it means that convection that is so strong that the substrate W placed on the support member 20 is flapped by the fluid is not induced. The predetermined clearance S may be about 0.5 mm. Each projection 21 of the support member 20 has a tip (an end opposite the end in contact with the front face 11f) that is formed to have as small area as possible so that no heat is directly transferred between the projections 21 and the substrate W. Direct heat transfer between the projections 21 and the substrate W may hinder uniform heat transfer to the entire face Wf of the substrate W. Then, the resulting temperature variation in the face Wf of the substrate W may cause adverse effects such as non-uniform melting of the solder (not shown) placed on the substrate W. Thus, the expression "no heat is directly transferred between the projections 21 and the substrate W" as used herein means that it is enough if substantially no direct heat transfer occurs. Typically, it means that heat transfer that causes temperature variation in the substrate W does not occur when the substrate W is heated with the heater 10. One specific configuration example is to support the substrate W at points or along lines. To support the substrate W at points or along lines is intended to support the substrate W in such a manner as to prevent non-uniform heat transfer (non-uniform contact) that causes adverse effects such as non-uniform melting of the solder (not shown) placed on the substrate W. In this embodiment, each of the projections 21 has a pointed tip as seen in a vertical cross-section.

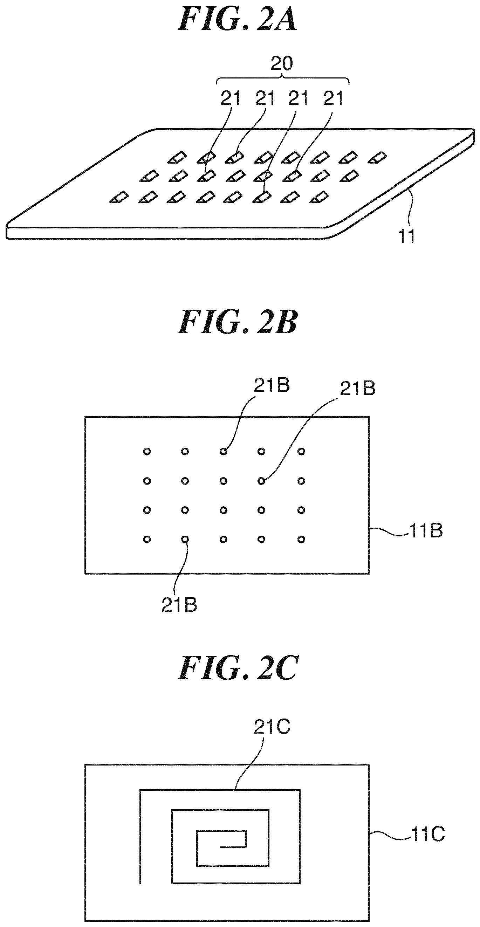

As shown in the perspective view of FIG. 2A, in this embodiment, the support member 20 is constituted by arranging short straight projections 21 in lines. Each of the projections 21 is formed to have a linear portion adapted to contact the face Wf of the substrate W to provide a configuration in which no direct heat transfer occurs between the projections 21 and the substrate W because the substrate W is supported along a plurality of lines. Instead of the configuration shown in FIG. 2A, a configuration as shown in FIG. 2B may be employed in which a plurality of dot-like projections 21B is provided on a face of a jig 11B so that the substrate W can be supported at a plurality of points, or a configuration as shown in FIG. 2C may be employed in which one spiral projection 21C is provided on a face of a jig 11C so that the substrate W can be supported along one curved (or polygonal) line. Although not shown, the support member may be constituted of a suspended member attached to an upper part of the chamber 30 (refer to FIG. 1), instead of being provided on a face of a jig, so that the substrate W can be suspended from above.

Referring again to FIG. 1, description of the configuration of the heating apparatus 1 is continued. The chamber 30 is configured to be able to accommodate the jig 11 and the support member 20 and to seal its interior. Typically, the chamber 30 is formed to have a rectangular parallelepiped shape. The chamber 30 has an opening 30h through its lateral wall through which the substrate W can be transferred into and out of the chamber 30, and is provided with a shutter 33 that can open and close the opening 30h. The jig 11 is placed at a bottom of the chamber 30. Of the elements constituting the heater 10, the jig 11 is placed in the chamber 30 while the IR lamp 13 is placed outside the chamber 30. Because the IR lamp 13 is placed outside the chamber 30, the configuration in the chamber 30 can be simplified and the maintenance within the chamber 30 can be carried out easily. That part of the chamber 30 on which the jig 11 is placed, in other words, that part of the chamber 30 between the jig 11 and the IR lamp 13 is constituted of a quartz glass 30Q. This configuration enables infrared rays irradiated from the IR lamp 13 to reach the jig 11 through a floor (sectional face) of the chamber 30. The part may be constituted of a material, other than the quartz glass 30Q, which allows electromagnetic waves that cause heat generation to pass through it.

The gas supply unit 40 supplies a treatment gas G into the chamber 30 to create a preferable atmosphere when the substrate W is heated. The gas supply unit 40 includes a gas supply pipe 41 and a gas supply valve 42. The gas supply pipe 41 is a pipe constituting a flow path that directs the treatment gas G into the chamber 30. One end of the gas supply pipe 41 is connected to the chamber 30, and the other end of the gas supply pipe 41 is connected to a treatment gas supply source (not shown). The gas supply valve 42 is a valve that is installed in the gas supply pipe 41 to permit or interrupt the flow of the treatment gas G through the gas supply pipe 41. Typically, a control valve is used as the gas supply valve 42 to adjust flow rate. Typically, depending on the type of the substrate W, an inert gas such as nitrogen or argon, or a reducing gas such as a carboxylic acid, e.g. formic acid, is used as the treatment gas G.

The controller 60 serves to control the operation of the heating apparatus 1. The controller 60 is configured to be able to vary the output of the IR lamp 13 by a control signal sent, by wire or radio, from the controller 60 to the IR lamp 13. The controller 60 is electrically connected by wire or radio to the gas supply valve 42, and is configured to be able to adjust an opening of the gas supply valve 42 by a control signal sent thereto.

Referring next to FIG. 3, a method for producing a plate-like object, according to an embodiment of the present invention, is described. FIG. 3 is a flowchart, illustrating a process of producing a plate-like object. While a method for producing a plate-like object using the heating apparatus 1 as described above (refer to FIG. 1) is described in the following, a plate-like object may be produced without using the heating apparatus 1. The following description of a method for producing a plate-like object using the heating apparatus 1 also serves as a description of the operation of the heating apparatus 1. In the following description, when mention is made of configuration of the heating apparatus 1, reference is made to FIG. 1 as appropriate.

When the production of a plate-like object is started, the shutter 33 of the chamber 30 is opened and the substrate W with solder (not shown) placed on a face opposite the face Wf is transported into the chamber 30 (heating target object providing step: S1). Next, the substrate W is mounted on the support member 20 with the face Wf of the substrate W opposed to the front face 11f of the jig 11 to have the substrate W supported on the support member 20 (supporting step: S2). The controller 60 then starts heating the substrate W via the jig 11 by energizing the IR lamp 13 to output infrared rays (heating step: S3). The substrate W is heated in the following manner. The infrared rays irradiated from the IR lamp 13 reach the reverse face 11r of the jig 11 through the quartz glass 30Q and increase the temperatures of the jig 11 and the support member 20. Because the jig 11 has a relatively high thermal conductivity and a relatively small thermal capacity, the temperature of the entire jig 11 increases rapidly. After the temperature of the front face 11f of the jig 11 has increased in this way, the heat in the jig 11 transfers to the substrate W. At this time, because the substrate W is in contact with the support member 20 but supported along lines on the support member 20, no direct heat transfer from the support member 20 substantially occurs. As a result, heat transfer from the jig 11 to the substrate W is achieved primarily by heat transfer via the treatment gas G and heat transfer by convection, if any, is less than the heat transfer via the treatment gas G. In other words, heat transfer from the jig 11 to the substrate W is achieved exclusively via the treatment gas G present between the jig 11 and the substrate W. Thus, the substrate W can be heated uniformly with a simple configuration. The temperature of the jig 11 is preferably kept within a temperature difference of about 50°C or less from the substrate W, for example.

When heating of the substrate W is started, the controller 60 opens the gas supply valve 42 to introduce the treatment gas G into the chamber 30 (S4). At this time, the treatment gas G should be introduced into the chamber 30 at such a flow rate that the substrate W supported on the support member 20 is not flapped by convection due to introduction of the treatment gas G. Even if the substrate W has a portion susceptible to oxidation such as a metal film, creation of an atmosphere of the treatment gas G in the chamber 30 can prevent the portion from undergoing oxidation when the substrate W is heated later. When the chamber 30, including the clearance S between the jig 11 and the substrate W, is filled with the treatment gas G, the shutter 33 is closed to seal the chamber 30, and then the controller 60 closes the gas supply valve 42. Alternatively, if the chamber 30 is provided with an air vent (not shown), the shutter 33 may be closed immediately after the substrate W is transported into the chamber 30 and then air may be discharged through the air vent (not shown) while the treatment gas G is supplied from the gas supply unit 40 into the chamber 30.

When the chamber 30 is filled with the treatment gas G, the controller 60 determines whether the plate-like object is completed (S5). The plate-like object is an object desired as an intermediate material including the substrate W with molten solder (not shown) thereon. Thus, whether the plate-like object is completed relates to whether the temperature of the substrate W increases and reaches the melting point of the solder (not shown). In this embodiment, the relationship between the output of the IR lamp 13 and the temperature rise of the substrate W has been previously obtained and stored in the controller 60. Then, it is determined whether the plate-like object is completed by seeing if, based on the relationship stored in the controller 60, the time for which infrared rays has been emitted from the IR lamp 13 is sufficient to provide the necessary amount of heat to melt the solder (not shown) on the substrate W without overheating the substrate W. If the plate-like object is not completed in the step of determining whether the plate-like object is completed (S5), the process returns to the step of determining whether the plate-like object is completed (S5). On the other hand, if the plate-like object is completed, the controller 60 turns off the IR lamp 13 to stop heating of the substrate W (S6). The process from the start of heating of the substrate W (S3) to a point immediately before stopping the heating of the substrate W (S6) corresponds to the heating step. After heating of the substrate W is stopped, the shutter 33 of the chamber 30 is opened and the completed plate-like object is taken out of the chamber 30 (S7). In this way, a plate-like object is produced. The shutter 33 may be opened and closed either manually or by the controller 60.

As described above, according to the heating apparatus 1 of this embodiment, because the substrate W from which a plate-like object is produced is supported along a plurality of lines on the support member 20 provided on the front face 11f of the jig 11, the substrate W is heated by heat transfer via the treatment gas G present between the jig 11 and the substrate W with a predetermined clearance S being maintained between the face Wf and the front face 11f. Thus, direct heat transfer from the jig 11 to the substrate W is prevented, and the substrate W can be heated uniformly with a simple configuration. If the predetermined clearance S were not present between the jig 11 and the substrate W and the substrate W were heated with the entire face Wf of the substrate W in contact with the front face 11f of the jig 11, in other words, if the substrate W were heated in a state where heat transfer caused by heat conduction due to contact between the substrate W and the jig 11 occurs, if the substrate W warped, the area of contact would exist only partially between the substrate W and the jig 11, making it difficult to heat the entire substrate W uniformly. In this regard, when the substrate W is heated by heat transfer via the treatment gas G present between the jig 11 and the substrate W with a predetermined clearance S being maintained between the face Wf of the substrate W and the front face 11f of the jig 11 as in the heating apparatus 1 according to this embodiment, the heat transfer from the jig 11 to the substrate W is substantially achieved by heat conduction via the treatment gas G. In this case, the heat conduction via the treatment gas G does not change significantly even if there is minor variation in the predetermined clearance S.

Referring next to FIG. 4, a heating apparatus 1A according to an exemplified modification of the embodiment of the present invention is described. FIG. 4 is a cross-sectional view, illustrating a general configuration of the heating apparatus 1A. The heating apparatus 1A is primarily different from the heating apparatus 1 (refer to FIG. 1) in the following points. In the heating apparatus 1A, the jig 11 with the support member 20 disposed on the front face 11f (which is hereinafter referred to as "carrier plate 1120") is not fixed in the chamber 30. A plurality of rollers 35 is arranged inside and outside the chamber 30 across the opening 30h so that the carrier plate 1120 can be moved into and out of the chamber 30 by rotation of respective rollers 35. Belt conveyers may be disposed inside and outside the chamber 30 in place of the plurality of rollers 35. In the heating apparatus 1A, the jig 11 is in a state of being located in a position opposed to the IR lamp 13 (as shown by solid lines in FIG. 4) when the carrier plate 1120 is located in the chamber 30, and the jig 11 is in a state of not being located in the position opposed to the IR lamp 13 (as indicated by broken lines in FIG. 4) when the carrier plate 1120 is located outside the chamber 30. In the heating apparatus 1A, retainers 38 are provided at such positions that they are located above the substrate W when the carrier plate 1120 with the substrate W mounted thereon is placed on the rollers 35 in the chamber 30. A plurality of retainers 38 is arranged so that the substrate W can be in a horizontal state when the retainers 38 support ends of the substrate W. The heating apparatus 1A is configured such that the substrate W can receive infrared rays from the IR lamp 13 when the substrate W is supported by the retainers 38 with the carrier plate 1120 in a state of not being located in the position opposed to the IR lamp 13. In other words, the heating apparatus 1A is configured such that the substrate W can receive heat directly from the IR lamp 13. Except for the above, the heating apparatus 1A is constituted in the same manner as the heating apparatus 1 (refer to FIG. 1) although the gas supply unit 40 and the controller 60 are not shown in FIG. 4.

In the heating apparatus 1A constituted as described above, when the substrate W is heated via the jig 11 in the chamber 30 to produce a plate-like object, the same procedure is followed as in the heating apparatus 1 (refer to FIG. 1) except for the mode of transporting the substrate W into the chamber 30. In the heating apparatus 1A, the substrate W is placed on the support member 20 when the carrier plate 1120 is located outside the chamber 30 (supporting step), and the substrate W and the carrier plate 1120 in this state are transported together into the chamber 30. In the heating apparatus 1A, because the substrate W is provided into the heating apparatus 1A when the substrate W is placed on the support member 20, a heating target object providing step is carried out before or simultaneously with the supporting step. After that, as is the case in the heating apparatus 1 (refer to FIG. 1), the IR lamp 13 is activated to start heating of the substrate W and the treatment gas G is introduced into the chamber 30, and then when the plate-like object is completed, the IR lamp 13 is turned off to stop heating of the substrate W. In the heating apparatus 1A, when the plate-like object is transported out of the chamber 30 after heating of the substrate W is stopped, the carrier plate 1120 is transported out of the chamber 30 together with the plate-like object placed thereon. In the heating apparatus 1A, because the carrier plate 1120 is transported out of the chamber 30 when the production of a plate-like object (heating of the substrate W) is not in progress, maintenance, such as washout of volatiles generated during heating the substrate W, is facilitated. In addition, because the substrate W and the carrier plate 1120, which have been located outside the chamber 30, are transported together into the chamber 30 when the substrate W is transported into the chamber 30, the temperatures of the substrate W and the carrier plate 1120 can be increased in the chamber 30 from near ambient temperature outside the chamber 30 before the transportation. This facilitates the estimation of changes in temperature of the substrate W.

In addition, in the heating apparatus 1A, heating of the substrate W may be achieved by transporting the substrate W with solder placed thereon into the chamber 30 without using the carrier plate 1120, introducing the treatment gas G into the chamber 30 with the substrate W placed on the retainers 38 (as shown by chain double-dashed lines in FIG. 4), activating the IR lamp 13 to start heating of the substrate W, and turning off the IR lamp 13 to stop heating of the substrate W when a plate-like object is completed. In this case, the substrate W is primarily heated by radiant heat of infrared rays from the IR lamp 13. When the substrate W is not adversely affected when heated by radiant heat, the rate of temperature rise of the substrate W can be increased and the time necessary to produce the plate-like object can be eventually shortened when the substrate W receives heat directly from the IR lamp 13 without the intervention of the jig 11. In the heating apparatus 1A, when the substrate W is not heated without using the carrier plate 1120, the retainers 38 may not be provided.

While the heating source is the IR lamp 13 in the above description, a heating source other than the IR lamp 13, such as a hot plate (a plate-like member that can achieve a temperature rise) or an electric device that generates Joule heat, may be employed. However, the IR lamp 13 is preferred because it facilitates temperature control. While the heater 10 is configured to have the jig 11 and the heating source (the IR lamp 13), which are separated from each other, in the above description, the jig 11 and the heating source may be constituted integrally with each other.

While the treatment gas G is introduced into the chamber 30 (S4) after heating of the substrate W is started (S3) in the above description, heating of the substrate W may be started after the treatment gas G is introduced into the chamber 30 or heating of the substrate W may be started simultaneously with the introduction of the treatment gas G into the chamber 30.

In the above description, when the substrate W is heated, an atmosphere of an inert gas or reducing gas used as a treatment gas G is created in the chamber 30. However, when oxidation of the substrate W does not cause any problem, the substrate W may be heated in an air atmosphere without using the treatment gas G. When the substrate W is heated in an air atmosphere, the chamber 30 may not be provided.

In the above description, the amount of heat generation from the IR lamp 13 is controlled by time based on the relationship between the output of the IR lamp 13 and the temperature rise of the substrate W obtained previously (open loop control). However, the amount of heat generation from the IR lamp 13 may be controlled by detecting a temperature of the substrate W or the jig 11 with a thermocouple or radiation thermometer and feeding back the detected temperature for adjustment of the output of the IR lamp 13 (closed loop control). When a temperature of the substrate W is detected, a temperature of a dummy substrate mounted adjacent to the substrate W on the support member 20 may be detected.

### [Example]

In the following, the results of verification of variation of temperature distribution caused by differences in the mode in which the substrate W is heated are described. As substrates W for verification, glass epoxy substrates having a rectangular shape of 60 mm × 90 mm and a thickness of 0.8 mm with 35 µm copper foil attached to both sides were used. The substrates W were placed on the support member 20 mounted on the front face 11f of the jig 11 as shown in FIG. 1 (Example), directly on the front face 11f of the jig 11, which was prepared by omitting the support member 20 from the configuration in FIG. 1 (Comparative Example 1), and on the retainers 38 shown in FIG. 4 (Comparative Example 2). Then, the substrates W were heated and the processes of temperature rise of the substrates W were detected. In Comparative Example 1, the substrate W was mounted on the front face 11f with an entire face of the substrate W in contact with the front face 11f of the jig 11, and held with pins in order to keep the substrate W in contact with the front face 11f as much as possible even if the substrate W had a tendency to warp when heated. The temperature of the substrate W was detected with six thermocouples placed at regular intervals on an imaginary straight line connecting one corner of the face Wf of the rectangular substrate W and its center of gravity. Heating of the substrate W was conducted by controlling the output of the IR lamp 13 so that the substrate W could experience a temperature rise of about 2°C per second.

In Example, the substrate W exhibited a relatively milder temperature rise than the jig 11 at the start of heating, and the rates of temperature rise of the jig 11 and the substrate W became equal to each other about 250 seconds after the start of heating. Meanwhile, the variation among the temperatures detected at the six points was 3 to 4°C. It should be noted that the substrate W was not held with pins in Example as in Comparative Example 1.

In Comparative Example 1, the substrate W exhibited a temperature rise similar to that of the jig 11 from the beginning of heating, and also experienced a sudden temperature change at some points. The variation among the temperatures detected at the six points was 3 to 6°C. In Comparative Example 1, the temperature variation was relatively small. This is partly because the entire face Wf of the substrate W was forcibly kept in contact with the jig 11 with pins so that the substrate W could not warp. When pins for holding the substrate W are provided, a drive unit for driving the pins is required. This not only complicates the structure but also makes maintenance difficult such as cleaning required when volatiles generated when the substrate W is heated has gotten into the complicated structure.

In Comparative Example 2, after the start of heating, a significant variation was observed among the temperatures detected at the six points from a little after approximately 150 seconds to 260 seconds with a maximum difference of 45°C. In Comparative Example 2, it is considered that variation of heat transfer caused by convection of gas is significant.

The above results demonstrated that the substrate W could be heated uniformly in Example without using pins as those used in Comparative Example 1.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

### DESCRIPTION OF REFERENCE NUMERALS AND SYMBOLS

- 1: heating apparatus
- 10: heater
- 11: jig
- 11f: front face
- 13: IR lamp
- 20: support member
- 30: chamber
- 38: retainer
- 40: gas supply unit
- 60: controller
- S: predetermined clearance
- W: heating target object
- Wf: face

## Claims

1. A heating apparatus (1) for heating a plate-like heating target object (W), the plate-like heating target object (W) having a thickness of about 1mm or less, the heating apparatus (1) comprising:
a heater (10) having a front face (11f) formed to have a size capable of covering a whole face (Wf) of the heating target object (W) and configured to generate heat to be applied to the heating target object (W); and
a support member (20) for supporting the face (Wf) of the heating target object (W) in such a manner that the support member (20) is configured to prevent direct heat transfer between the face (Wf) of the heating target object (W) and the support member (20) and a clearance between the front face (11f) and the face (Wf) of the heating target object (W) is maintained in a predetermined clearance (S) when the heating target object (W) is supported, wherein the predetermined clearance (S) allows a fluid to be present between the front face (11f) and the face (Wf) of the heating target object (W) but does not induce convection of the fluid;
the heater (10) including:
a heating source (13) for receiving external energy and converting the external energy into heat; and
a jig (11) having the front face (11f) formed thereon, the jig (11) being configured to receive heat from the heating source (13) and transfer heat to the fluid present in the predetermined clearance (S) while preventing the heating target object (W) from being directly exposed to electromagnetic waves that cause heat generation;
wherein the support member (20) is configured to include a plurality of projections (21) which are disposed on the front face (11f) of the jig (11) ;
the heating apparatus (1) further comprising:
a chamber (30) accommodating the jig (11) and the support member (20); and
a gas supply unit (40) for supplying an inert gas or reducing gas into the chamber (30) at such a flow rate that the heating target object (W) supported on the support member (20) is not flapped;
wherein the fluid present in the predetermined clearance (S) is the inert gas or reducing gas;
**characterised in that** each of the projections (21) is formed integrally with the jig (11) and the jig (11) is configured to be movable between a state of being located in a position opposed to the heating source (13) and a state of not being located in the position opposed to the heating source (13).

2. The heating apparatus according to claim 1, further comprising a retainer (38) for retaining the heating target object (W) in a position where it can receive heat from the heating source (13) with the jig (11) in the state of not being located in the position opposed to the heating source (13).

3. The heating apparatus according to any one of claims 1 or 2, wherein each of the projections (21) is formed to have a linear portion adapted to contact the face (Wf) of the heating target object (W) and has a pointed tip in a vertical cross-section.

4. The heating apparatus according to any one of claim 1 through claim 3, wherein the heating source (13) is constituted of an infrared ray lamp installed outside the chamber (30) accommodating the jig (11) and the support member (20).

5. The heating apparatus according to any one of claim 1 through claim 4, further comprising:
a controller (60) for controlling a heat generation amount from the heater (13), the controller (60) being configured to control the heat generation amount from the heater (13) based on a temperature of the heating target object (W).

6. A method for producing a plate-like object, the method comprising:
a heating target object providing step of providing a plate-like heating target object (W) into the heating apparatus (1) according to any one of claim 1 through claim 5;
a supporting step of supporting the heating target object (W) with the support member (20); and
a heating step of heating the heating target object (W) with the heater (13) to produce the plate-like object.

## Patentansprüche

1. Heizgerät (1) zum Erhitzen eines plattenartigen Gegenstands (W), der erhitzt werden soll, wobei der plattenartige Gegenstand (W), der erhitzt werden soll, eine Dicke von etwa 1 mm oder weniger aufweist, wobei das Heizgerät (1) aufweist:
eine Heizvorrichtung (10) mit einer Vorderseite (11f), die so geformt ist, dass sie eine Größe aufweist, die in der Lage ist, eine ganze Fläche (Wf) des Gegenstands (W), der erhitzt werden soll, zu bedecken, und die so konfiguriert ist, dass sie Wärme erzeugt, die dafür vorgesehen ist, auf den Gegenstand (W), der erhitzt werden soll, aufgebracht zu werden; und
ein Stützelement (20) zum Abstützen der Fläche (Wf) des Gegenstands (W), der erhitzt werden soll, in einer solchen Weise, dass das Stützelement (20) so konfiguriert ist, dass es eine direkte Wärmeübertragung zwischen der Fläche (Wf) des Gegenstands (W), der erhitzt werden soll, und dem Stützelement (20) verhindert, und ein Zwischenraum zwischen der Vorderseite (11f) und der Fläche (Wf) des Gegenstands (W), der erhitzt werden soll, als ein vorbestimmter Zwischenraum (S) gehalten wird, wenn der Gegenstand (W), der erhitzt werden soll, abgestützt wird, wobei der vorbestimmte Zwischenraum (S) es ermöglicht, dass sich ein Fluid zwischen der Vorderseite (11f) und der Fläche (Wf) des Gegenstands (W), der erhitzt werden soll, befindet, aber keine Konvektion des Fluids induziert;
wobei die Heizvorrichtung (10) aufweist:
eine Wärmequelle (13) zur Aufnahme von externer Energie und zur Umwandlung der externen Energie in Wärme; und
ein Gestell (11), an dem die Vorderseite (11f) ausgebildet ist, wobei das Gestell (11) so konfiguriert ist, dass es Wärme von der Wärmequelle (13) empfängt und Wärme auf das Fluid, das sich in dem vorbestimmten Zwischenraum (S) befindet, überträgt, während verhindert wird, dass der Gegenstand (W), der erhitzt werden soll, elektromagnetischen Wellen direkt ausgesetzt wird, die eine Wärmeerzeugung verursachen;
wobei das Stützelement (20) so konfiguriert ist, dass es eine Mehrzahl von Vorsprüngen (21) aufweist, die an der Vorderseite (11f) des Gestells (11) angeordnet sind;
wobei das Heizgerät (1) ferner aufweist:
eine Kammer (30), die das Gestell (11) und das Stützelement (20) aufnimmt; und
eine Gaszufuhreinheit (40) zum Zuführen eines Inertgases oder eines Reduktionsgases in die Kammer (30) mit einer solchen Strömungsgeschwindigkeit, dass der Gegenstand (W), der erhitzt werden soll und der auf dem Stützelement (20) abgestützt ist, nicht zum Flattern gebracht wird;
wobei das Fluid, das sich in dem vorbestimmten Zwischenraum (S) befindet, das Inertgas oder das Reduktionsgas ist;
**dadurch gekennzeichnet, dass** jeder der Vorsprünge (21) einstückig mit dem Gestell (11) ausgebildet ist und das Gestell (11) so konfiguriert ist, dass es zwischen einem Zustand, in dem es sich in einer der Wärmequelle (13) gegenüberliegenden Position befindet, und einem Zustand, in dem es sich nicht in der der Wärmequelle (13) gegenüberliegenden Position befindet, bewegbar ist.

2. Heizgerät nach Anspruch 1, ferner aufweisend einen Halter (38) zum Halten des Gegenstands (W), der erhitzt werden soll, in einer Position, in der er Wärme von der Wärmequelle (13) aufnehmen kann, wobei sich das Gestell (11) in dem Zustand befindet, in dem es sich nicht in der der Wärmequelle (13) gegenüberliegenden Position befindet.

3. Heizgerät nach einem der Ansprüche 1 oder 2, wobei jeder der Vorsprünge (21) so geformt ist, dass er einen linearen Abschnitt aufweist, der so eingerichtet ist, dass er die Fläche (Wf) des Gegenstands (W), der erhitzt werden soll, berührt, und eine in einem vertikalen Querschnitt spitz zulaufende Spitze aufweist.

4. Heizgerät nach einem der Ansprüche 1 bis 3, wobei die Wärmequelle (13) aus einer Infrarotstrahlungslampe besteht, die außerhalb der Kammer (30) installiert ist, in der das Gestell (11) und das Halteelement (20) untergebracht sind.

5. Heizgerät nach einem der Ansprüche 1 bis 4, ferner aufweisend:
eine Steuerung (60) zum Steuern einer Menge an erzeugter Wärme von der Heizvorrichtung (13), wobei die Steuerung (60) so konfiguriert ist, dass sie die Menge an erzeugter Wärme von der Heizvorrichtung (13) auf der Grundlage einer Temperatur des Gegenstands (W), der erhitzt werden soll, steuert.

6. Verfahren zur Herstellung eines plattenartigen Gegenstandes, wobei das Verfahren aufweist:
einen Schritt des Bereitstellens eines Gegenstands, der erhitzt werden soll, in welchem Schritt ein plattenartiger Gegenstand (W), der erhitzt werden soll, in das Heizgerät (1) nach einem der Ansprüche 1 bis 5 eingeführt wird;
einen Stützschritt, bei dem der Gegenstand (W), der erhitzt werden soll, mit dem Stützelement (20) abgestützt wird; und
einem Heizschritt, bei dem der Gegenstand (W), der erhitzt werden soll, mit der Heizvorrichtung (13) erhitzt wird, um den plattenförmigen Gegenstand zu erzeugen.

## Revendications

1. Dispositif de chauffage (1) pour chauffer un objet cible chauffant de type plaque (W), l'objet cible chauffant de type plaque (W) ayant une épaisseur d'environ 1 mm ou moins, le dispositif de chauffage (1) comprenant :
un élément chauffant (10) ayant une face frontale (11f) formée pour avoir une taille capable de couvrir une face entière (Wf) de l'objet cible chauffant (W) et configuré pour générer la chaleur à appliquer à l'objet cible chauffant (W) ; et
une membrure de support (20) pour supporter la face (Wf) de l'objet cible chauffant (W) de telle manière que la membrure de support (20) est configurée pour éviter le transfert thermique direct entre la face (Wf) de l'objet cible chauffant (W) et la membrure de support (20) et un espacement entre la face frontale (11f) et la face (Wf) de l'objet cible chauffant (W) est maintenu dans un espacement prédéterminé (S) lorsque l'objet cible chauffant (W) est supporté, dans lequel l'espacement prédéterminé (S) permet à un fluide d'être présent entre la face avant (11f) et la face (Wf) de l'objet cible chauffant (W) mais n'induit pas de convection du fluide ;
l'élément chauffant (10) incluant :
une source chauffante (13) pour recevoir de l'énergie externe et convertir l'énergie externe en chaleur ; et
un montage (11) ayant la face avant (11f) formée sur lui, le montage (11) étant configuré pour recevoir la chaleur de la source chauffante (13) et transférer la chaleur au fluide présent dans l'espacement prédéterminé (S) tout en empêchant l'objet cible chauffant (W) d'être directement exposé aux ondes électromagnétiques qui provoquent la génération de chaleur ;
dans lequel la membrure de support (20) est configurée pour inclure une pluralité de projections (21) qui sont disposées sur la face avant (11f) du montage (11) ;
le dispositif de chauffage (1) comprenant :
une chambre (30) recevant le montage (11) et la membrure de support (20) ; et
une unité d'alimentation en gaz (40) pour alimenter en gaz inerte ou gaz réducteur la chambre (30) à un débit tel que l'objet cible chauffant (W) supporté sur la membrure de support (20) n'est pas renversé ;
dans lequel le fluide présent dans l'espacement prédéterminé (S) est le gaz inerte ou le gaz réducteur ;
**caractérisé en ce que** chacune des projections (21) est formée de façon intégrale avec le montage (11) et le montage (11) est configuré pour être mobile entre un état dans lequel il est disposé dans une position opposée à la source chauffante (13) et un état dans lequel il n'est pas disposé dans la position opposée à la source chauffante (13).

2. Dispositif de chauffage selon la revendication 1, comprenant en outre une retenue (38) pour retenir un objet cible chauffant (W) dans une position dans laquelle il peut recevoir de la chaleur de la source chauffante (13) avec le montage (11) dans l'état dans lequel il n'est pas situé dans la position opposée à la source chauffante (13).

3. Dispositif de chauffage selon l'une quelconque des revendications 1 ou 2, dans lequel chacune des projections (21) est formée pour avoir une portion linéaire adaptée pour être en contact avec la face (Wf) de l'objet cible chauffant (W) et a une extrémité pointue dans une section transversale verticale.

4. Dispositif de chauffage selon l'une quelconque des revendications 1 à 3, dans lequel la source chauffante (13) est constituée d'une lampe à rayonnement infrarouge installée hors de la chambre (30) accueillant le montage (11) et la membrure de support (20) .

5. Dispositif de chauffage selon l'une quelconque des revendications 1 à 4, comprenant en outre : un contrôleur (60) pour contrôler une quantité de génération de chaleur de l'élément chauffant (13), le contrôleur (60) étant configuré pour contrôler la quantité de génération de chaleur de l'élément chauffant (13) sur la base d'une température de l'objet cible chauffant (W).

6. Procédé de production d'un objet de type plaque, le procédé comprenant :
une étape de fourniture d'un objet cible chauffant consistant à fournir un objet cible chauffant de type plaque (W) dans le dispositif de chauffage (1) selon l'une quelconque des revendications 1 à 5 ;
une étape de support consistant à supporter l'objet cible chauffant (W) avec la membrure de support (20) ;
et
une étape de chauffage consistant à chauffer l'objet cible chauffant (W) avec l'élément chauffant (13) pour produire l'objet de type plaque.
